**Europäisches Patentamt**

**European Patent Office**

**Office européen des brevets**

(19)

(11) Veröffentlichungsnummer: **0 010 228**
**B1**

(12) **EUROPÄISCHE PATENTSCHRIFT**

(45) Veröffentlichungstag der Patentschrift:
15.09.82

(51) Int. Cl.³: **B 29 D 23/04**, B 29 F 3/00

(21) Anmeldenummer: 79103788.0

(22) Anmeldetag: 04.10.79

(54) Verfahren zur Herstellung schrumpfarmer Stranghohlprofile.

(30) Priorität: 06.10.78 DE 2843779

(43) Veröffentlichungstag der Anmeldung:
30.04.80 Patentblatt 80/9

(45) Bekanntmachung des Hinweises auf die Patenterteilung:
15.09.82 Patentblatt 82/37

(84) Benannte Vertragsstaaten:
AT BE CH DE FR GB IT NL

(56) Entgegenhaltungen:
**CH-A-548 271**
**CH-A-585 619**
**DE-A-2 010 441**
**DE-A-2 504 190**
**KUNSTSTOFFE, Band 66, Heft 1, 1976, E. GAUBE et al. »Rohre aus thermoplastischen Kunststoffen«**

(73) Patentinhaber: **WACKER-CHEMIE GMBH,**
**Prinzregentenstrasse 22, D-8000 München 22 (DE)**

(72) Erfinder: **Pepperl, Gernot, Dr., Dipl.-Chem.,**
**Marienbergerstrasse 78, D-8263 Burghausen (DE)**

## Verfahren zur Herstellung schrumpfarmer Stranghohlprofile

Die vorliegende Erfindung beschreibt ein Verfahren zur Herstellung von Stranghohlprofilen, wie z. B. Fensterprofilen aus elastomermodifizierten schlagzähen Kunststoffmassen, die sich durch sehr niedrige Schrumpfwerte beim Altern auszeichnen.

Bei der Herstellung eines Kunststoffprofilstranges geht man normalerweise davon aus, daß die Extruderkopfausgangsöffnung die Sollmaße, wie Querschnitt und Wandstärke, des Profilstranges bestimmen. Das Kalibrierwerkzeug ist lediglich nachgeschaltet und besitzt eine Kalibrierausnehmung, die der Extruderkopfausgangsöffnung entspricht. Weiterhin werden Kunststoffprofile dadurch erzeugt, daß beim Kalibrieren eine Querschnittsreduzierung erfolgt. Dies hat den Vorteil, daß die dabei erhaltenen Profile eine exakte Geometrie aufweisen. Nachteilig ist jedoch, daß zur Regulierung eines auftretenden Massestaus vor der Kalibrierung aufwendige Meß- und Regeleinrichtungen notwendig sind. Aufgrund der starken Verformungskräfte treten bei diesen Verfahren, besonders bei großen Extrusionsgeschwindigkeiten, beim fertiggestellten Kunststoffprofil Schrumpfungen bei Alterung und Lagerung auf.

Des weiteren ist auch schon in der DE-A-2 504 190 vorgeschlagen worden, den unerwünschten Schrumpf zu vermindern, indem die Profilaußenmaße am Extruderwerkzeug um 5% und die Spaltbreiten des Extruderwerkzeuges um mehr als 25% kleiner gewählt werden als die gewünschten Dimensionen und Wandstärken des Fertigprofils. Das dort vorgeschlagene Verfahren ist weiterhin dadurch gekennzeichnet, daß die Abzugsgeschwindigkeit des Profils gleich der Extrusionsgeschwindigkeit gehalten wird und zur Vermeidung von unerwünschten Reckungen das Profil im Kalibrierwerkzeug an definierten Stellen durch spezielle Kühlung stärker und schneller abgekühlt wird. Auch durch diese aufwendige Kühlung kann eine Reckung nicht ganz vermieden, es können sogar zusätzliche Spannungen erzeugt werden.

Zweck der Erfindung ist es, schrumpfarme Hohlprofile aus schlagzäh modifizierten plastisch verformbaren Polymermassen zu erhalten.

Aufgabe der Erfindung ist es, ein Extrusionsverfahren zur Herstellung schrumpfarmer Hohlprofile aus schlagzäh modifiziertem thermoplastisch verformbarem Polymermaterial anzugeben.

Gegenstand der Erfindung ist ein Verfahren zur Extrusion schrumpfarmer Stranghohlprofile aus thermoplastisch verformbaren schlagzähen Kunststoffmassen, vorzugsweise elastomermodifizierten PVC-Massen, eines innerhalb vorgegebener Toleranzen außen kalibrierten Strangprofils, mittels einer Schneckenstrangpresse mit Strangpreßwerkzeug und Kalibriervorrichtung für den kalibrierten Kunststoffprofilstrang und Abzugsvorrichtung, wobei zunächst ein Kunststoffhohlstrang mit einstellbarer Extruderwerkzeugaustrittsgeschwindigkeit erzeugt, dieser im Kalibrierwerkzeug kalibriert und gekühlt und durch die Abzugsvorrichtung mit einstellbarer Abzugsgeschwindigkeit abgezogen wird, wobei die Profilaußenmaße am Extruderwerkzeugausgang um 2 bis 5% kleiner als die Abmessungen des Kalibriereingangs sind, die Profilwand und -steg erzeugenden Spaltweiten des Extruderwerkzeugaustritts jeweils einheitlich um einen Betrag zwischen 20 und 40% kleiner als die Sollwandstärken des Profils sind, dadurch gekennzeichnet, daß bei Extruderwerkzeugausstoßgeschwindigkeiten zwischen 50 und 180, vorzugsweise 100 bis 160 cm/Minute gearbeitet wird und die Abzugsgeschwindigkeit nach der Kalibrierung 20 bis 40% kleiner als die Extruderwerkzeugausgangsgeschwindigkeit ist.

Das erfindungsgemäße Verfahren ist besonders dann vorteilhaft, wenn Stranghohlprofile mit Innenstegen und/oder Profilnasen hergestellt werden müssen.

Bei dem erfindungsgemäßen Verfahren wird ein Massestau vor der Kalibriereinrichtung vermieden.

Überraschenderweise wird es durch die erfindungsgemäße Verfahrensweise möglich, Kunststoffhohlprofilstränge, auch mit komplizierter Geometrie, wie z. B. mit Innenstegen und Außenprofilnasen bei hohen Extrusionsgeschwindigkeiten so herzustellen, daß die Kunststoffhohlprofilstränge geringe oder gar keine eingefrorenen Rückstellkräfte aufweisen. Dies beinhaltet den Vorteil, daß bei Lagerung bzw. Alterung der Kunststoffhohlprofilstränge deren Schrumpfung im wesentlichen unterdrückt werden kann.

Stranghohlprofile werden beispielsweise als Fensterprofile, Baderoste, Zaun- und Markierungspfähle, Bank-, Balkon- und Garagentorlatten sowie im Inneneinsatz bei Schubkasten-, Türzargen- oder Kühltruhenprofilen eingesetzt. Die Profile können dabei mehr oder weniger kompliziert aufgebaut sein. Einfache geschlossene Hohlprofile können auch innere Stege und Kammern aufweisen, aber auch vom Profil abstehende Nasen und Stege, auch in abgewinkelter Form, werden häufig gefordert. Je komplizierter das Hohlprofil gestaltet ist, desto schwieriger wird es naturgemäß, exakte Maßgenauigkeit zu erreichen.

Durch das erfindungsgemäße Verfahren ist es möglich, ausgehend von kleineren Dimensionen der Außenabmessungen und der Stege am Extruderkopfwerkzeugausgang, das Profil in die Kalibrierung unter Dimensionsvergrößerung hineinquellen zu lassen. Dabei werden auch Kanten und Stege maßhaltig und exakt ausgefüllt. Durch die Einstellung der Abzugsgeschwindigkeit nach der Kalibrierung im Verhältnis zur Austrittsgeschwindigkeit aus dem Extruderkopfwerkzeugausgang kann das Quellungsverhältnis festgelegt werden. Starke Quellung, d. h. z. B. starke Quellung der Profilwände bewirkt dabei, daß die Schrumpfung des fertigen Profils gering wird, bei nur geringer Quellung des Profils in der Kalibrierung muß mit höherer Schrumpfung gerechnet werden. Die Quellung kann üblicherweise bereits mit 20% als ausreichend für die Erzielung eines geringen Schrumpfwertes bezeichnet werden. Bei Kunststoffmassen mit hohem Anteil an elastomerer Komponente ist auch eine Erhöhung des Quellfaktors empfehlenswert. Quellungsverhältnisse über 40% sind zwar realisierbar, aber selten notwendig. Neben der Quellung der Profilwände, -stege und -nasen ist es vorteilhaft, auch die äußeren Dimensionen der Profile isotrop bzw. anisotrop zu vergrößern. Dies wird dadurch bewirkt, daß die äußeren Dimensionen des Extruderkopfausgangs 2 bis 5% geringere Dimensionen aufweisen, als der Kalibrierwerkzeugeingang. Diese geringe Dimensionsaufweitung macht es möglich, die Kalibriereinrichtung nahe an den Extruderkopfausgang heranzuführen. Die äußeren Dimensionen der Profile liegen bis ca. 10 cm Durchmesser, die Profilwände, -stege und -nasen haben Stärken zwischen 1 und 6 mm.

Thermoplastisch verformbare schlagzähe Kunststoffmassen sind dem Fachmann bekannt. Üblicherweise bestehen diese aus einer thermoplastischen harten Kunststoffmasse und einer elastischen Kunststoffkomponente. Als harte Kunststoffkomponente wird häufig Polyvinylchlorid eingesetzt, das nach den üblichen Polymerisationsverfahren, wie Masse-, Suspensions-, Mikroperl- oder Emulsionspolymerisation hergestellt sein kann. Der K-Wert solcher Polymerisate liegt im allgemeinen zwischen 55 und 80. Diese Polymerisate sind mit elastomeren Komponenten, wie z. B. Äthylenvinylacetatcopolymerisaten mit 25 bis 60 Gew.-% Vinylacetateinheiten im Copolymeren, chloriertem Polyäthylen, Reinacrylatkautschuk, Butylacrylat und Acrylatcopolymeren, wie Acrylbutadienstyrolcopolymerisaten modifiziert. Der Gehalt an elastomerer Kunststoffkomponente ist dabei zwischen 3 und 20 Gew.-%. Neben physikalischen Mischungen aus harter Polymermasse und elastomerer Komponente in feinster Verteilung ist es vorteilhaft, Polymermassen alleine oder im Gemisch mit harten Homopolymermassen einzusetzen, die durch Pfropfpolymerisation der harten Polymerkomponente, wie z. B. Vinylchlorid auf die elastomere Komponente, wie z. B. Äthylenvinylacetatcopolymere entstanden sind. Hier liegt der Elastomeranteil ebenfalls zwischen 3 und 20 Gew.-%. Die Erfindung ist besonders vorteilhaft bei Polymermassen anzuwenden, die Vinylchlorid auf Äthylenvinylacetatcopolymeres gepfropft enthalten.

Die Schrumpfprobleme bei Stranghohlprofilen werden besonders auffällig, wenn mit hoher Extruderausstoßleistung gearbeitet wird. Teilweise können diese Probleme durch Verarbeitungshilfsstoffe, wie z. B. Gleitmittel, ausgeglichen werden, bei Ausstoßleistungen über 50 cm/Minute, vorzugsweise 100 cm/Minute, sind jedoch die Schrumpfprobleme durch herkömmliche Maßnahmen nicht mehr auszugleichen. Extrusionsgeschwindigkeiten bis zu 160 bzw. 180 cm/Minute, wie sie bisher gefordert werden, sind bei erfindungsgemäßer Verfahrensweise jedoch problemlos zu beherrschen.

Bei schlagzähen Polymermassen auf der Basis Vinylchlorid in Kombination mit elastomerer Kunststoffkomponente, wie z. B. Äthylenvinylacetatcopolymeren, braucht die Extrusionstemperatur gegenüber herkömmlicher Verfahrensweise nicht erhöht zu werden.

### Beispiel

Mit einem Doppelschneckenextruder CT 80 der Firma Anger Plastik KG und einem Fensterprofilwerkzeug der Firma Schwarz, Wolfratshausen/Obb. wurde eine schlagzähe Polyvinylchloridmasse, die 6 Gew.-% Äthylenvinylacetat (45 Gew.-%) in gepfropfter Form enthält, mit einer Extruderwerkzeugausgangsgeschwindigkeit von 110 cm/Minute und einer Abzugsgeschwindigkeit nach der Kalibrierung und Kühlung von 79 cm/Minute erzeugt. Die isotrope Aufweitung zwischen Extruderwerkzeugausgang und Kalibrierwerkzeugeingang beträgt 3%. Die Quellung der Profilwände und -stege beträgt ca. 25%, so daß eine Wandstärke für das fertige Profil von 3 mm resultiert. Der Düsenspalt im Profilwerkzeug betrug 2,25 mm. Das resultierende Profil zeigt einen Schrumpfwert von nur 1,6%.

### Vergleichsbeispiel

Wie im erfindungsgemäßen Beispiel wird mit einer Abzugsgeschwindigkeit nach der Kalibrierung von 79 cm/Minute gearbeitet, wobei aber der Extruderwerkzeugprofilquerschnitt gleiche Dimensionen wie die Kalibrierung aufweist. Die Schlitze des Extruderkopfwerkzeugs geben die Sollwandstärke des fertigen Profils vor, es tritt keine Quellung beim Übergang vom Extruderkopfwerkzeug zur Kalibriereinrichtung auf. Die Extruderwerkzeugaustrittsgeschwindigkeit ist im wesentlichen gleich der Abzugsgeschwindigkeit nach der Kalibrierung. Das resultierende Profil weist eine Schrumpfung von 2,9% auf.

### Patentansprüche

1. Verfahren zur Extrusion schrumpfarmer Stranghohlprofile aus thermoplastisch verformbaren schlagzähen Kunststoffmassen, vorzugsweise elastomermodifizierten Polyvinylchlorid-Massen, eines innerhalb vorgegebener Toleranzen außen kalibrierten Strangprofils, mittels einer Schneckenstrangpresse mit Strangpreßwerkzeug und Kalibriervorrichtung für den kalibrierten Kunststoffprofilstrang und Abzugsvorrichtung, wobei zunächst ein Kunststoffhohlstrang mit einstellbarer Extruderwerkzeugaustrittsgeschwindigkeit erzeugt, dieser im Kalibrierwerkzeug kalibriert und gekühlt und durch die Abzugsvorrichtung mit einstellbarer Abzugsgeschwindigkeit abgezogen wird, wobei die Profilaußenmaße am Extruderwerkzeugausgang um 2 bis 5% kleiner als die Abmessungen des Kalibriereingangs sind, die Profilwand und -steg erzeugenden Spaltweiten des Extruderwerkzeugaustritts jeweils einheitlich um einen Betrag zwischen 20 und 40% kleiner als die Sollwandstärken des Profils sind, dadurch gekennzeichnet, daß bei Extruderwerkzeugausstoßgeschwindigkeiten zwischen 50 und 180; vorzugsweise 100 bis 160 cm/Minute gearbeitet wird und die Abzugsgeschwindigkeit nach der Kalibrierung 20 bis 40% kleiner als die Extruderwerkzeugausgangsgeschwindigkeit ist.

2. Verfahren nach Anspruch 1, dadurch gekennzeichnet, daß die Stranghohlprofile Innenstege und/oder Profilnasen aufweisen.

3. Verfahren nach Anspruch 1 und 2, dadurch gekennzeichnet, daß vor der Kalibrierung ein Massestau vermieden wird.

## Claims

1. Process for the extrusion of shrink-resistant hollow sections consisting of a thermoplastically deformable, impact-resistant plastics substance, preferably an elastomer-modified polyvinyl chloride substance, and having a profile calibrated externally within given tolerances, using a screw-type extrusion machine with an extrusion die, a calibrating device for calibrating the external profile of the section and a removal device, wherein, first, a hollow billet is produced at an adjustable extrusion die output speed, this billet then being calibrated by the calibrating tool, cooled and removed by the removal device at an adjustable removal speed, wherein the external dimensions of the profile of the section are, at the exit of the extrusion die, from about 2 to 5% smaller than the dimensions of the calibrating input, and wherein the gap widths of the extrusion die exit producing the wall and cross-piece of the section are, in each case, uniformly between 20 and 40% smaller than the desired wall thicknesses of the section, characterised in that extrusion die output speeds of between 50 and 180, preferably from 100 to 160, cm/minute are used and the removal speed after calibration is from 20 to 40% less than the extrusion die output speed.

2. Process according to claim 1, characterised in that the extruded hollow sections have internal crosspieces and/or profile noses.

3. Process according to claims 1 and 2, characterised in that a build-up of plastics substance is avoided in front of the calibration device.

## Revendications

1. Procédé pour fabriquer, par extrusion, des profilés creux peu contractibles à partir de matières plastiques résilientes et moulables à l'état thermoplastique, de préférence à partir de matières à base de polychlorure de vinyle modifiées par un élastomère, ayant un profil calibré extérieurement avec des tolérances données, au moyen d'une extrudeuse à vis équipée d'une filière ainsi que d'un dispositif de calibrage pour le boudin profilé en matière plastique calibré et d'un dispositif de tirage, procédé dans lequel on produit d'abord un boudin creux en matière plastique à une vitesse réglable de sortie de la filière, on calibre et refroidit ce boudin dans l'outil de calibrage et on le fait avancer, à l'aide du dispositif de tirage, à une vitesse réglable, les dimensions extérieures du profilé à la sortie de la filière étant inférieures de 2 à 5% aux dimensions de l'entrée de calibrage, et les écartements radiaux de la sortie de la filière, qui engendrent la paroi et le filet du profilé, étant inférieurs d'une valeur, à chaque fois la même, comprise entre 20 et 40% aux épaisseurs de paroi prévues du profilé, ce procédé étant caractérisé en ce qu'on travaille à des vitesses de débit de la filière comprises entre 50 et 180 cm/minute, de préférence entre 100 et 160 cm/minute, et en ce que la vitesse de tirage, après le calibrage, est inférieure de 20 à 40% à la vitesse de sortie de la filière.

2. Procédé selon la revendication 1, caractérisé en ce que les profilés creux extrudés présentent des filets intérieurs et/ou des talons profilés.

3. Procédé selon l'une des revendications 1 et 2, caractérisé en ce qu'on évite une retenue de la matière devant le dispositif de calibrage.